# EUROPÄISCHE PATENTSCHRIFT

(11) **EP 1 958 416 B1**
(45) Veröffentlichungstag und Bekanntmachung des Hinweises auf die Patenterteilung: **09.01.2013**
(21) Anmeldenummer: 06805518.5
(22) Anmeldetag: 14.11.2006
(51) Int. Cl.: H04L 29/06

(54) **MOBILE VERMITTLUNGSVORRICHTUNG UND VERFAHREN ZUM ÜBERTRAGEN EINER INFORMATION ZWISCHEN WENIGSTENS ZWEI TEILNEHMERN**
MOBILE EXCHANGE DEVICE AND METHOD FOR TRANSMITTING A PIECE OF INFORMATION BETWEEN AT LEAST TWO SUBSCRIBERS
DISPOSITIF DE COMMUTATION MOBILE ET PROCEDE POUR TRANSMETTRE UNE INFORMATION ENTRE AU MOINS DEUX ABONNES

(30) Priorität: 25.11.2005 DE 102005056623
(43) Veröffentlichungstag der Anmeldung: 20.08.2008
(73) Patentinhaber: Deutsche Telekom AG, 53113 Bonn (DE)
(72) Erfinder: GROTE, Ulrich, 61231 Bad Nauheim (DE)
(86) Internationale Anmeldenummer: PCT/DE2006/001988
(87) Internationale Veröffentlichungsnummer: WO 2007/059728

(56) Entgegenhaltungen:
- EP-A- 1 296 503
- WO-A-01/60091
- US-B1- 6 577 637

## Beschreibung

Die Erfindung betrifft eine mobile Vermittlungsvorrichtung, welche zum Empfangen und Weiterleiten von Informationen ausgebildet ist. Ferner betrifft die Erfindung ein Verfahren zum Übertragen von Informationen zwischen wenigstens zwei Teilnehmern, die verschiedenen Kommunikationsnetzen zugeordnet sind, und zwar unter Verwendung einer teilnehmerseitig angeordneten, mobilen Vermittlungsvorrichtung.

Die Übertragung von Informationen, insbesondere von Multimediainformationen, über öffentliche und private Kommunikationsnetze wird in der heutigen Medienlandschaft immer wichtiger. Öffentliche Kommunikationsnetze sind im Wesentlichen die herkömmlichen öffentlichen analogen und digitalen Fernsprechnetzen (PSTN, ISDN), breitbandige Computernetze, wie z. B. das Internet, und Mobilfunknetze. Daneben existieren private drahtgebundene und drahtlose lokale Netze (LANs und WLANs).

Um den Kommunikationsteilnehmern eine offene, netzunabhängige Kommunikation zu ermöglichen, werden Vermittlungsrechner, sogenannte Gateways, implementiert, die Informationen von einem Kommunikationsnetz empfangen, umsetzen und dann an ein anderes Kommunikationsnetz weiter geben können. Darüber hinaus werden zahlreiche Anstrengungen unternommen, Mobilfunknetze und herkömmliche Fernsprechnetze für Mobilfunkteilnehmer oder Festnetzteilnehmer gemeinsam nutzbar zu machen.

Aus der DE 197 10 349 C2 ist beispielsweise ein sogenannter Netzintegrator bekannt, der ein gesteuertes Anschalten einer Telekommunikationsendeinrichtung an ein Mobilfunknetz oder ein Festnetz ermöglicht. Der Netzintegrator weist unter anderem eine HF-Sende/Empfangs-Einrichtung auf, die eine Schnittstelle zu einem Mobilfunknetz bildet. Ferner ist eine Anschlusseinheit vorgesehen, über die der Netzintegrator an eine mit einem Netzübergabepunkt des Festnetzes verbundene Telekommunikationsanschlusseinheit angeschaltet werden kann. Weiterhin ist eine Steuereinrichtung vorgesehen, die die Anschaltung der Telekommunikationsendeinrichtung an das Mobilfunknetz und/oder das Festnetz über eine Vermittlungseinrichtung steuert.

EP 1 296 503 beschreibt einen Netzwerkknoten der eine Schnittstelle zwischen IP und GSM Netzwerken bereitstellt. US 6 577 637 beschreibt einen Knoten in einem Mobilfunknetzwerk, der eingehende Anrufe an IP Teilnehmer weiterleiten kann. WO 01/60091 offenbart ein Verfahren zum Anschluss von Basisstationen an ein IP Netzwerk.

Der vorliegenden Erfindung liegt die Aufgabe zugrunde, eine mobile Vermittlungsvorrichtung sowie ein Verfahren zur Verfügung zu stellen, mit denen die Übertragung von Informationen über unterschiedliche Kommunikationsnetze verbessert und kostengünstiger gestaltet werden kann.

Ein Kerngedanke der Erfindung ist darin zu sehen, eine mobile Vermittlungseinrichtung bereit zu stellen, die bei einem Kommunikationsteilnehmer aufgestellt wird. Die mobile Vermittlungsvorrichtung ermöglicht es, Kommunikationsverbindungen, insbesondere Gesprächsverbindungen über ein Mobilfunknetz und ein IP-basiertes Kommunikationsnetz aufzubauen. Auf diese Weise können zum Beispiel hochwertige Mobilfunkgespräche, beispielsweise Auslandsgespräche, als kostengünstige Internet-Telefonate, auch Voice over IP (VoIP) genannt, über ein breitbandiges IP-basiertes Kommunikationsnetz, insbesondere das Internet, weitergeleitet werden. Zudem können Mobilfunkbetreiber ihren Kunden eine preiswerte Funk-zu-Funk-Verbindung über das eigene Mobilfunknetz zur mobilen Vermittlungsvorrichtung anbieten. Über das Mobilfunknetz ankommende Gespräche können dann als IP-Telefonate kostengünstig zum Beispiel auf Grundlage einer vereinbarten DSL-Flatrate, abgewickelt werden. In umgekehrter Richtung können preisgünstige IP-Telefonate zur mobilen Vermittlungseinrichtung geführt und dort als Funk-zu-Funk-Verbindung über das Mobilfunknetz zu einem mobilen Funkteilnehmer weitergeleitet werden.

Das obengenannte technische Problem wird zum einen durch die Merkmale des Anspruchs 1 gelöst sowie durch Verfahren nach den Ansprüchen 7 und 10.

Vorteilhafte Weiterbildungen sind Gegenstand der Unteransprüche.

Bei dem IP-basierten Kommunikationsnetz handelt es sich vorzugsweise um ein öffentliches Breitbandnetz, insbesondere das Internet, an das die mobile Vermittlungsvorrichtung mittels einer BreitbandAnschlusseinrichtung und einer digitale Teilnehmeranschlussleitung angeschlossen ist. In diesem Fall kann die Sende/Empfangseinrichtung als DSL-Modem ausgebildet sein.

An dieser Stelle sei darauf hingewiesen, dass die Sende/Empfangseinrichtung, die Mobilfunkeinrichtung, die Umsetzeinrichtung und auch die Steuereinrichtung integrale Bestandteile der mobilen Vermittlungseinrichtung sind.

Damit die mobile Vermittlungsvorrichtung sowohl über das Mobilfunknetz als auch über das IP-basierte Kommunikationsnetz erreichbar ist, ist der Vermittlungsvorrichtung eine Mobilfunkadresse und eine IP-Nummer, welche eine VoIP-Rufnummer sein kann, zugeordnet. Die Mobilfunkadresse ist vorzugsweise in einer freigeschalteten Mobilfunkkarte enthalten, die in die Mobilfunkeinrichtung eingesetzt werden kann. Die IP-Nummer der mobilen Vermittlungsvorrichtung kann in einem separaten Speicher abgelegt sein.

Um den Einsatzbereich der mobilen Vermittlungseinrichtung erweitern zu können, ist eine Schnittstelle zum Anschalten der mobilen Vermittlungsvorrichtung an ein lokales Netz, eine Schnittstelle zum Anschalten der mobilen Vermittlungsvorrichtung an ein drahtloses lokales Netz, eine PSTN- und/oder ISDN-Schnittstelle zum Anschalten der Vorrichtung an ein analoges oder digitales Fernsprechnetz und/oder wenigstens eine weitere Schnittstelle zum Anschalten wenigstens einer Telekommunikationseinrichtung vorgesehen. Als Telekommunikationseinrichtung können Computer, Faxgeräte, Anrufbeantworter, drahtgebundene oder drahtlose Telefone und dergleichen an die entsprechenden Schnittstellen angebunden werden.

Informationen, die über das Mobilfunknetz und/oder das IP-basierte Kommunikationsnetz empfangen werden, können über einen Router an wenigstens eine der Schnittstellen weiter geleitet werden. Auf diese Weise ist es möglich, eingehende Informationen, auch Gespräche nicht nur an einen am IP-Kommunikationsnetz oder Mobilfunknetz angeschlossenen Zielteilnehmer weiter zu leiten, sondern zum Beispiel auch in einem Anrufbeantworter zu speichern oder beispielsweise als Textdatei in einem Computer abzulegen. Vorzugsweise leitet die mobile Vermittlungsvorrichtung über das IP-basierte Kommunikationsnetz geführte IP-Telefonate über das Mobilfunknetz einem mobilen Zielteilnehmer oder ein über das Mobilfunknetz empfangenes Gespräch als IP-Telefonat über das IP-basierte Kommunikationsnetz an den gerufenen IP-Teilnehmer weiter. Allerdings können beliebige Multimediadaten, insbesondere auch Video- und/oder Textdaten von der mobilen Vermittlungsvorrichtung über ein Kommunikationsnetz empfangen und an ein anderes Kommunikationsnetz weiter geleitet werden.

Um über das IP-basierte Kommunikationsnetz Gesprächsverbindungen aufbauen zu können, unterstützt das erste Kommunikationsprotokoll die Internet-Telefonie über das IP-basierte Kommunikationsnetz. Das erste Kommunikationsprotokoll kann hierzu beispielsweise das Session-Initiation-Protokoll (SIP), das Session-Description-Protokoll (SDP) sowie das Real-Transport-Protokoll (RTP) umfassen, um eine IP-Telefonverbindung zwischen einem an dem IP-basierten Kommunikationsnetz angeschalteten IP-Teilnehmer und der mobilen Vermittlungsvorrichtung herzustellen.

Mit anderen Worten kann sich die mobile Vermittlungsvorrichtung gegenüber dem IP-basierten Kommunuikationsnetz beispielsweise wie ein SIP-Client und gegenüber dem Mobilfunknetz wie ein Mobilfunk-Client verhalten.

Die Erfindung wird nachfolgend anhand eines Ausführungsbeispiels in Verbindung mit den beiliegenden Zeichnungen näher erläutert. Es zeigen:
- Fig. 1: ein beispielhaftes Kommunikationssystem, in dem die Erfindung verwirklicht ist, und
- Fig. 2: ein detailliertes Blockschaltbild der in Fig. 1 gezeigten mobilen Vermittlungsvorrichtung.

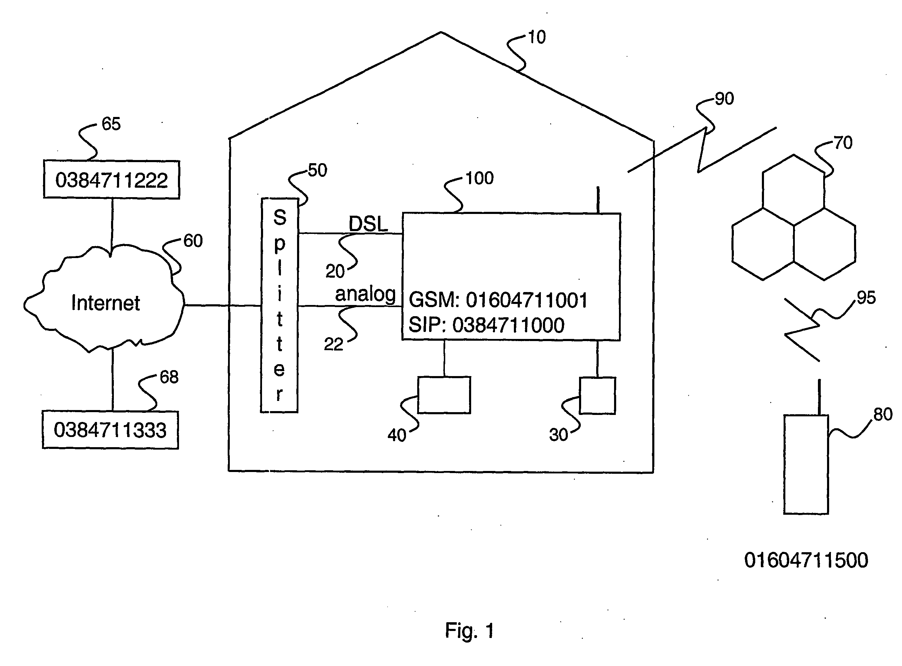

Fig. 1 zeigt ein Gebäude 10, in dem eine mobile Vermittlungsvorrichtung 100 aufgestellt ist. Die mobile Vermittlungsvorrichtung übernimmt unter anderem die Funktion eines Gateways, das bei einem Teilnehmer aufgestellt ist. Die mobile Vermittlungsvorrichtung 100 wird demzufolge nachfolgend auch Home-Access-Gateway oder kurz mobiles Gateway genannt. Das mobile Gateway 100 ist an einen herkömmlichen Splitter 50 angeschlossen, welcher die über eine Teilnehmeranschlussleitung ankommenden Informationen in ihren schmalbandigen (z. B. Sprachsignale) und breitbandigen Anteil (z. B. Multimediadaten) aufteilt. Die Breitbanddaten werden über die symbolisch mit DSL bezeichnete Leitung 20 zum mobilen Gateway übertragen, während die schmalbandigen Signale über eine Leitung 22 dem mobilen Gateway 100 zugeführt werden. Der einfachen Darstellung wegen ist der Splitter 50 lediglich mit einem IP-Kommunikationsnetz 60, beispielsweise dem Internet verbunden. In der Praxis ist der Splitter 50 zudem mit einem herkömmlichen Fernsprechnetz, beispielsweise mit dem ISDN und/oder PSTN, verbunden.

Beispielhaft sind an dem Internet 60 zwei IP-Endgeräte 65 und 68 angeschlossen. Denkbar ist auch, dass an das Internet 60 weitere mobile Vermittlungsvorrichtungen angeschaltet sind. Im vorliegenden Beispiel sei angenommen, dass beide IP-Endgeräte 65 und 68 für eine IP-Telefonie ausgerüstet sind.

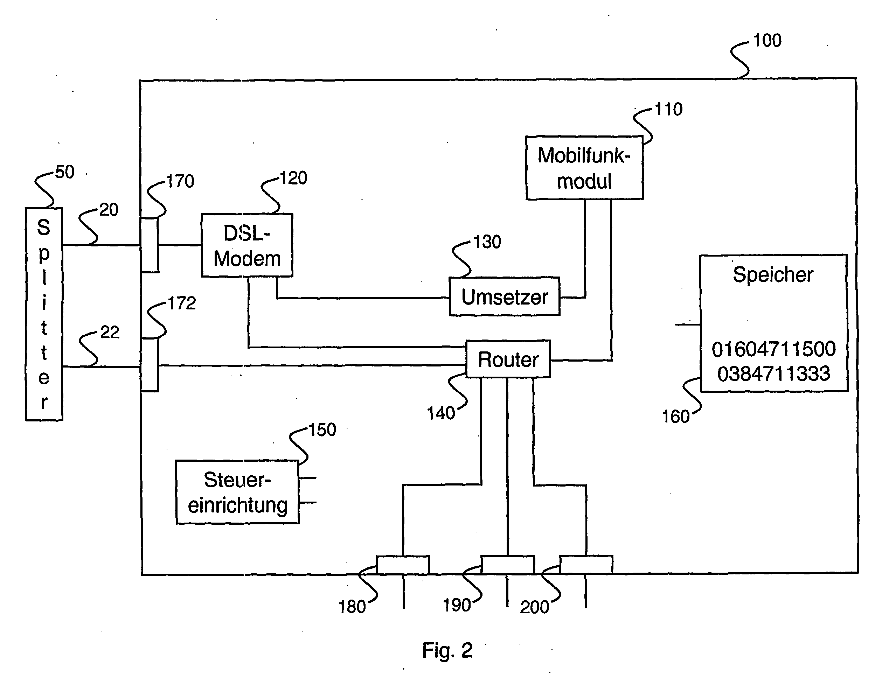

Das mobile Gateway 100 kann, wie in Fig.2 gezeigt, als Schnittstelle 180 beispielsweise eine Netzwerkkarte enthalten, an die ein Computer 40 über ein LAN angeschlossen werden kann. Weiterhin kann, wie in Fig. 2 dargestellt, in dem mobilen Gateway 100 zumindest eine Schnittstelle 190 installiert sein, an die je nach Ausführung ein analoges, digitales oder IP-taugliches Telefon angeschlossen werden kann.

Wie in Verbindung mit Fig. 2 noch näher erläutert wird, weist das mobile Gateway 100 ein Mobilfunkmodul 110 auf, das über ein Mobilfunknetz 70 mit einem mobilen Funktelefon 80 kommunizieren kann. Wie Fig. 1 zeigt, ist dem IP-Endgerät 65 beispielsweise die IP-Nummer 0384711222, dem IP-Endgerät 68 die IP-Nummer 0384711333 und dem mobilen Funkgerät 80 die Rufnummer 01604711500 zugeordnet.

Nunmehr wird der detaillierte Aufbau des mobilen Gateways 100 in Verbindung mit Fig. 2 näher erläutert. Das mobile Gateway 100 weist einen digitalen Breitbandanschluss 170 auf, über den zum Beispiel ein DSL-Modem 120 mit dem Splitter 50 verbunden ist. Ferner ist zur Abwicklung von Schmalbanddienste eine analoge Schnittstelle 172 vorgesehen, über die das mobile Gateway 100 mit dem Splitter 50 verbunden ist.

Das Mobilfunkmodul 110 weist in an sich bekannter Weise eine HF-Sende/Empfangsstufe auf. Ferner ist das Mobilfunkmodul 110 zur Aufnahme einer Mobilfunkkarte vorgesehen, die zur Inbetriebnahme des mobilen Gateways 100 frei geschaltet werden muss. Die Mobilfunkkarte enthält unter anderem die Teilnehmerrufnummer, beispielsweise die GSM-Nummer 01604711001, unter der das mobile Gateway 100 über das Mobilfunknetz 70 angewählt werden kann. Das DSL-Modem 120, das Mobilfunkmodul 110 und die analoge Schnittstelle 172 sind beispielsweise mit einem Router 140 verbunden, der empfangene Informationen auf die Schnittstellen 180, 190 und/oder eine Schnittstelle 200 verteilen kann. Die Schnittstelle 200 kann eine WLAN-Netzkarte sein, über die ein drahtloses Endgerät (nicht dargestellt) mit dem mobilen Gateway kommunizieren kann.

Dem DSL-Modem 120 und dem Mobilfunkmodul 110 ist ein Umsetzer 130 zugeordnet, der als Hardware- und/oder Softwaremodul ausgebildet sein kann. Der Umsetzer 130 dient dazu, Informationen, die am Mobilfunkmodul 110 ankommen, in Informationen umzusetzen, die über das DSL-Modem an das Internet 60, beispielsweise als IP-Telefonate weiter geleitet werden sollen. In umgekehrter Richtung setzt der Umsetzer 130 am DSL-Modem 120 ankommende Informationen in Informationen um, die vom Mobilfunkmodul 110 in das Mobilfunknetz 70 gesendet werden sollen. Insbesondere führt der Umsetzer 130 eine Protokollumsetzung durch, wobei ein erstes Kommunikationsprotokoll, welches die Kommunikation über das IP-basierte Kommunikationsnetz ermöglicht, in ein zweites Kommunikationsprotokoll, welches die Kommunikation über das Mobilfunknetz ermöglicht, und umgekehrt umgesetzt werden. Eine Steuereinrichtung 150 ist vorzugsweise mit dem DSL-Modem 120, dem Umsetzer 130, dem Mobilfunkmodul 110, dem Router 140 sowie einem Speicher 160 verbunden. Die Hauptaufgabe der Steuereinrichtung 150 ist darin zu sehen, dafür zu sorgen, dass Informationen, die vom Mobilfunknetz 70 zum Mobilfunkmodul 110 übertragen werden, in das Internet 60 weitergeleitet werden, und dass Informationen, die vom Internet 60 zum DSL-Modem 120 übertragen werden, in das Mobilfunknetz 70 weitergeleitet werden.

In dem Speicher 160 ist zum Beispiel die IP-Nummer 0384711333.des IP-Endgerätes 68 abgelegt, an die das mobile Gateway 100 automatisch vom Mobilfunknetz 70 kommende Informationen weiterleiten kann. Die ebenfalls im Speicher abgelegte Mobilfunkadresse 01604711500 kann von der Steuereinrichtung 150 dazu verwendet werden, Informationen, die über das Internet 60 am mobilen Gateway 100 empfangen werden, über den Umsetzer 130, das Mobilfunkmodul 110 und das Mobilfunknetz 70 zum mobilen Teilnehmer 80 automatisch weiterzuleiten.

Nachfolgend wird die Funktionsweise des mobilen Gateways 100 anhand zweier Szenarien näher beschrieben.

Beim ersten Szenario sei angenommen, dass ein Anruf vom Benutzer des mobilen Funkgerätes 80 aus eingeleitet wird. Bei dem Funkgerät 80 kann es sich um ein Mobiltelefon handeln. Zunächst wählt der Benutzer die Mobilfunkrufnummer 01604711001, welche dem mobilen Gateway 110 zugeordnet ist, an seinem Mobiltelefon 80. Daraufhin wird über das Mobilfunknetz 70 eine Funk-zu-Funk-Verbindung vom Mobiltelefon 80 zum Mobilfunkmodul 110 des mobilen Gateways 100 aufgebaut. Das im mobilen Gateway 100 implementierte Mobilfunk-Kommunikationsprotokoll sorgt dafür, dass dem Mobiltelefons 80 nach erfolgtem Verbindungsaufbau ein Quittungston übersandt wird. Nunmehr kann der Benutzer am Mobiltelefon 80 zum Beispiel die IP-Nummer 0384711222 des gewünschten IP-Teilnehmers 65, welcher am Internet 60 angeschlossen ist, manuell eingegeben. Alternativ kann die Steuereinrichtung 150 automatisch auf die im Speicher 160 gespeicherte IP-Nummer 0384711333 zugreifen, um automatisch einen IP-Verbindungsaufbau beispielsweise zum gewünschten IP-Teilnehmer 68 einzuleiten.

Im vorliegenden Beispiel sei angenommen, dass der Benutzer des Mobiltelefons 80 manuell die IP-Nummer des IP-Endgerätes 65 an seinem Mobiltelefon 80 eingibt. Die IP-Nummer 0384711222 wird über die Funkverbindung zum Mobilfunkmodul 110 des Gateways 100 übertragen. Unter Ansprechen auf die übertragene IP-Nummer leitet die Steuereinrichtung 150 einen Verbindungsaufbau über das Internet 60 zum gewünschten IP-Endgerät 65 ein. Das angerufene IP-Endgerät 65 kann dem Benutzer des Mobiltelefons 80 die Herstellung der Verbindung signalisieren. Nunmehr kann ein Gespräch zwischen dem Mobiltelefon 80 und dem IP-Endgerät 65 geführt werden. Hierzu werden die vom Benutzer am Mobiltelfon 80 eingegebenen Sprachinformationen über das Mobilfunknetz 70 am Mobilfunkmodul 110 des mobilen Gateways 100 empfangen und vom Umsetzer 130 in eine IP-Information umgesetzt. Die IP-Informationen werden dann als IP-Telefonat über das DSL-Modem 120 und das Internet 60 zum Teilnehmer 65 übertragen.

Um zwischen dem mobilen Gateway 100 und einem Mobilfunkteilnehmer über das Mobilfunknetz 70 eine Funk-zu-Funk-Verbindung herstellen zu können, ist in dem mobilen Gateway 100 ein an sich bekanntes Mobilfunk-Kommunikationsprotokoll implementiert. In ähnlicher Weise ist ein weiteres Kommunikationsprotokoll, beispielsweise unter anderem das SIP (Session-Initiation-Protokoll) abgelegt, welches eine IP-Telefonie zwischen einem am Internet 60 angeschlossenen IP-Teilnehmer und dem mobilen Gateway 100 ermöglicht.

Anzumerken ist ferner, dass Informationen vom Mobiltelefon 80 zum mobilen Gateway 100 übertragen werden können, bevor eine Kommunikationsverbindung vom Gateway 100 zum gewünschten IP-Teilnehmer 65 aufgebaut worden ist. In diesem Fall ist im mobilen Gateway 100 ein ausreichend großer Speicher vorzusehen, der die empfangenen Informationen zwischen speichern kann. Vorzugsweise werden die weiterzuleitenden Informationen bereits in dem Format zwischen gespeichert, in welchem sie an das jeweilige Kommunikationsnetz weitergeleitet werden müssen.

Gemäß einem zweiten Szenario sei nunmehr angenommen, dass ein Anruf vom IP-Endgerät 65 zum gewünschten Mobilfunkteilnehmer des Mobiltelefons 80 eingeleitet werden soll. Hierzu wird zunächst die IP-Nummer 0384711000, welche dem mobilen Gateway 100 zugeordnet worden ist, am IP-Endgerät 65 eingegeben und gewählt. Unter Verwendung des bekannten Session-Initiation-Protokolls wird eine IP-Telefonverbindung vom IP-Engerät 65 über das Internet 60 zum DSL-Modem 120 des mobilen Gateways 100 aufgebaut. Unter Ansprechen auf die im Speicher 160 abgelegte Mobilfunkrufnummer 01604711500 leitet die Steuereinrichtung 150 des mobilen Gateways 100 einen Verbindungsaufbau über das Mobilfunkmodul 110 und das Mobilfunknetz 70 zum Mobiltelefon 80 ein. Daraufhin klingelt das Mobiltelefon 80. Nach Annahme des Gesprächs am Mobiltelefon 80 wird das am DSL-Modem 120 ankommende IP-Telefonat als Mobilfunkgespräch über den Umsetzer 130, das Mobilfunkmodul 110 und das Mobilfunknetz 170 zum Mobiltelefon 80 weitergeleitet.

Wie bereits erwähnt, können am DSL-Modem 120 oder am Mobilfunkmodul 110 ankommende Informationen über den Router 140 den Schnittstellen 180, 190, 200 zugeführt werden. In diesem Fall sind den jeweiligen Schnittstellen nicht dargestellte Protokoll-Umsetzungseinrichtungen zugeordnet, so dass beispielsweise ein am DSL-Modem 120 ankommendes IP-Telefonat an einen mit der WLAN-Schnittstelle 200 verbundenen Mobilteilnehmer weiter geleitet werden kann.

Weiterhin ist es denkbar, dass am Mobilfunkmodul 110 oder am DSL-Modem 120 ankommende Sprachsignale in Texte umgesetzt werden. Die Textdaten können dann beispielsweise über die Netzkarte 180 an den Computer 40 weitergeleitet und dort als Textdatei hinterlegt werden.

## Patentansprüche

1. Teilnehmerseitig aufstellbare mobile Vermittlungsvorrichtung (100) zum Empfangen und Weiterleiten von Informationen, mit einer Mobilfunkeinrichtung (110) zum Senden und Empfangen von Informationen über ein öffentliches Mobilfunknetz (70),
einer Sende-/Empfangseinrichtung (120) zum Übertragen und Empfangen von Informationen über ein öffentliches IP-basiertes Kommunikationsnetz (60),
einer Umsetzeinrichtung (130) zum Umsetzen von Informationen, welche gemäß einem ersten Kommunikationsprotokoll, welches die Kommunikation über das öffentliche IP-basierte Kommunikationsnetz (60) ermöglicht, strukturiert sind, in Informationen, welche gemäß einem zweiten Kommunikationsprotokoll, welches die Kommunikation über das öffentliche Mobilfunknetz (70) ermöglicht, strukturiert sind, und umgekehrt,
einer Steuereinrichtung (150), die die Weiterleitung einer über das Mobilfunknetz (70) empfangenen Information in das IP-basierte Kommunikationsnetz (60) und umgekehrt steuert,
einer Breitbandanschlusseinrichtung (170) zum Anschließen der mobilen Vermittlungsvorrichtung über eine digitale breitbandige Teilnehmeranschlussleitunq an das IP-basierte Kommunikationsnetz (60),
wobei die Mobilfunkeinrichtung (110)
eine Mobilfunkadresse enthält, unter der die Vermittlungsvorrichtung (100) über das öffentliche Mobilfunknetz (70) angewählt werden kann, und wobei in der Vermittlungsvorrichtung (100) eine VoIP-Rufnummmer gespeichert ist, unter der die Vermittlungsvorrichtung (100) über das IP-basierte Kommunikationsnetz (60) angewählt werden kann.

2. Mobile Vermittlungsvorrichtung nach Anspruch 1, **dadurch gekennzeichnet, dass**
die Sende-/Empfangseinrichtung (120) ein DSL-Modem ist.

3. Mobile Vermittlungsvorrichtung nach einem der Ansprüche 1 bis 2,
**gekennzeichnet durch**
eine Schnittstelle (180) zum Anschalten der Vermittlungsvorrichtung (100) an ein lokales Netz, eine Schnittstelle (200) zum Anschalten der -
Vorrichtung an ein drahtloses lokales Netz,
eine analoge und/oder ISDN-Schnittstelle (190) zum Anschalten der Vorrichtung an eine analoge oder digitale Teilnehmeranschlussleitung, und/oder wenigstens eine weitere Schnittstelle zum Anschalten einer Telekommunikationseinrichtung (30).

4. Mobile Vermittlungsvorrichtung nach Anspruch 3, **gekennzeichnet durch**
einen Router (140) zum Weiterleiten einer über das Mobilfunknetz oder das IP-basierte Kommunikationsnetz empfangenen Information an wenigstens eine der Schnittstellen (180, 190, 200).

5. Mobile Vermittlungsvorrichtung nach einem der Ansprüche 1 bis 4,
**dadurch gekennzeichnet, dass**
die Informationen Multimediadaten, insbesondere Audio-, Video- und/oder Textdaten enthalten.

6. Mobile Vermittlungsvorrichtung nach einem der Ansprüche 1 bis 5,
**dadurch gekennzeichnet, dass**
das erste Kommunikationsprotokoll eine Internet-Telefonie über das IP-basierte Kommunikationsnetz ermöglicht.

7. Verfahren zum Übertragen einer Information zwischen wenigstens zwei Teilnehmern (65, 80), die verschiedenen öffentlichen Kommunikationsnetzen (60, 70) zugeordnet sind, unter Verwendung einer teilnehmerseitig angeordneten mobilen Vermittlungsvorrichtung (100), in der eine VoIP Ruf Nummer gespeichert ist, unter der die mobile Vermittlungsvorrichtung (100) über das öffentliche IP-basierte Kommunikationsnetz (60) angewählt wird, mit folgenden Schritten:
ein Kommunikationsverbindungsaufbau wird unter Ansprechen auf die der mobilen Vermittlungsvorrichtung (100) zugeordneten VoIP ruf Nummer über ein öffentliches IP-basiertes Kommunikationsnetz (60) zwischen einem an dem öffentlichen IP-basierten Kommunikationsnetz angeschalteten rufenden IP-Teilnehmer (65) und der mobilen Vermittlungsvorrichtung (100) eingeleitet;
Informationen werden vom rufenden IP-Teilnehmer (65) über das öffentliche IP-basierte Kommunikationsnetz (60) gemäß einem ersten Kommunikationsprotokoll zur mobilen Vemittlungsvorrichtung (100) übertragen; die Informationen werden von einer HF-Sende-/Empfangsstufe (110) der mobilen Vermittlungsvorrichtung (100) unter Ansprechen auf eine vorbestimmte Mobilfunkadresse über ein öffentliches Mobilfunknetz (70) zu einem gerufenen Mobilfunkteilnehmer (80) gemäß einem zweiten Kommunikationsprotokoll weitergeleitet.

8. Verfahren nach Anspruch 7,
**dadurch gekennzeichnet, dass**
die mobile Vermittlungsvorrichtung (100) vor der Weiterleitung der Information eine Verbindung zum gerufenen Mobilfunkteilnehmer (80) unter Ansprechen auf die vorbestimmte Mobilfunkadresse herstellt, wobei die Mobilfunkadresse in der mobilen Vermittlungseinrichtung (100) abgelegt ist oder vom rufenden IP-Teilnehmer (65) eingegeben wird.

9. Verfahren nach Anspruch 7 oder 8,
**dadurch gekennzeichnet, dass**
der mobilen Vermittlungsvorrichtung (100) ferner eine Mobilfunkadresse zugeordnet wird; dass eine Kommunikationsverbindung unter Ansprechen auf die der mobilen Vermittlungsvorrichtung (100) zugeordneten Mobilfunkadresse über das öffentliche Mobilfunknetz (70) zwischen einem an dem Mobilfunknetz (70) angeschalteten rufenden Mobilfunkteilnehmer (80) und der mobilen Vermittlungsvorrichtung (100) hergestellt wird; dass
Informationen vom rufenden Mobilfunkteilnehmer (80) über das Mobilfunknetz (70) gemäß dem zweiten Kommunikationsprotokoll zur mobilen Vermittlungsvorrichtung (100) übertragen werden; und dass
die Informationen von der mobilen Vermittlungsvorrichtung (100) unter Ansprechen auf eine vorbestimmte VoIP Ruf Nummer über das IP-basierte Kommunikationsnetz (60) zu einem gerufenen IP-Teilnehmer (65) gemäß dem ersten Kommunikationsprotokoll weitergeleitet werden.

10. Verfahren zum Übertragen einer Information zwischen wenigstens zwei Teilnehmern (65, 80), die verschiedenen öffentlichen Kommunikationsnetzen (60, 70) zugeordnet sind, unter Verwendung einer teilnehmerseitig aufgestellten mobilen Vermittlungsvorrichtung (100), wobei die Vermittlungsvorrichtung (100) eine Mobilfunkeinrichtung (110) aufweist, die eine Mobilfunkadresse enthält, unter der die Vermittlungsvorrichtung (100) über ein öffentliches Mobilfunknetz (70) angewählt wird, mit folgenden Schritten:
ein Kommunikationsverbindungsaufbau wird unter Ansprechen auf die der mobilen Vermittlungsvorrichtung (100) zugeordneten Mobilfunkadresse über ein öffentliches Mobilfunknetz (70) zwischen einem an dem Mobilfunknetz (70) angeschalteten rufenden Mobilfunkteilnehmer (80) und der mobilen Mobilfunkteilnehmer (80) und der mobilen Vermittlungsvorrichtung (100) eingeleitet;
Informationen werden vom rufenden Mobilfunkteilnehmer (80) über das öffentliche Mobilfunknetz (70) gemäß einem ersten Kommunikationsprotokoll zu einer HF-Sende-/Empfangsstufe (110) der mobilen Vemittlungsvorrichtung (100) übertragen;
die Informationen werden von der mobilen Vermittlungsvorrichtung (100) unter Ansprechen auf eine vorbestimmte VoIP Ruf Nummer über ein öffentliches IP-basiertes Kommunikationsnetz zu einem gerufenen IP-Teilnehmer gemäß einem zweiten Kommunikationsprotokoll weitergeleitet.

## Claims

1. A mobile switching device (100) to be set up on the subscriber side, for receiving and forwarding information, with
a mobile radio module (110) for transmitting and receiving information via a public mobile radio network (70)
a transmitting / receiving module (120) for transmitting and receiving information via a public IP-based communications network (60),
a converting module (130) for converting information structured according to a first communication protocol which allows for communication via the IP-based communications network (60) into information structured according to a second communication protocol which allows for communication via the mobile radio network (70), and vice versa,
a control module (150) controlling the forwarding of information received via the mobile radio network (70) into the IP-based communications network (60) and vice versa,
a wideband connection module (170) for connecting the mobile switching device to the IP-based communications network (60) via a digital wideband subscriber line,
wherein the mobile radio module (110) contains a mobile radio address through which the switching device (100) can be called via the public mobile radio network (70), and wherein a VoIP subscriber number is stored in the switching device (100) through which the switching device (100) can be called via the IP-based communications network (60).

2. The mobile switching device of claim 1, **characterised in that** the transmitting /receiving module (120) is a DSL modem.

3. The mobile switching device according to any one of claims 1 to 2, **characterised by** an interface (180) for connecting the switching device (100) to a local network,
an interface (200) for connecting the device to a wireless local network,
an analogue and/or ISDN interface (190) for connecting the device to an analogue or digital subscriber line, and/or
at least one further interface for connecting a telecommunication module (30).

4. The mobile switching device according to claim 3, **characterised by** a router (140) for forwarding information received via the mobile radio network or the IP-based communications network to at least one of the interfaces (180, 190, 200).

5. The mobile switching device according to any one of claims 1 to 4, **characterised in that** the information contains multimedia data, in particular audio, video and/or text data.

6. The mobile switching device according to any one of claims 1 to 5, **characterised in that** the first communication protocol enables internet telephony via the IP-based communications network.

7. A method for transmitting information between at least two subscribers (65, 80) associated with two different public communications networks (60, 70), using a mobile switching device (100) arranged on the subscriber side in which a VoIP subscriber number is stored through which the mobile switching device (100) is called via the public IP-based communications network (60), the method comprising the following steps:
launching the setup of a communication link, in response to the VoIP subscriber number assigned to the mobile switching device (100), via a public IP-based communications network (60) between a calling IP subscriber (65) connected to the public IP-based communications network and the mobile switching device (100);
transmitting information from the calling IP subscriber (65) to the mobile switching device (100) via the public IP-based communications network (60) according to a first communication protocol;
forwarding the information by means of an RF transmitting / receiving stage (110) of the mobile switching device (100) in response to a predetermined mobile radio address via a public mobile radio network (70) to a called mobile radio subscriber (80) according to a second communication protocol.

8. The method according to claim 7, **characterised in that**, before forwarding the information, the mobile switching device (100) sets up a connection to the called mobile radio subscriber (80) in response to the predetermined mobile radio address, wherein the mobile radio address is stored in the mobile switching device (100) or is entered by the calling IP subscriber (65).

9. The method according to claim 7 or 8, **characterised in that** a mobile radio address is further assigned to the mobile switching device (100); that
a communication link between a calling mobile radio subscriber (80) connected to the mobile radio network (70) and the mobile switching device (100) is setup, in response to the mobile radio address assigned to the mobile switching device (100), via the mobile radio network (70); that
transmitting information from the calling mobile radio subscriber (80) to the mobile switching device (100) via the mobile radio network (70) according to the second communication protocol; and that
the information is forwarded from the mobile switching device (100) to a called IP subscriber (65) via the IP-based communications network (60) in response to a predetermined VoIP subscriber number according to the first communication protocol.

10. A method for transmitting information between at least two subscribers (65, 80) associated with two different communications networks (60, 70), using a mobile switching device (100) setup on the subscriber side, wherein the switching device (100) has a mobile radio module (110) containing a mobile radio address through which the switching device (100) is called via a public mobile radio network (70), the method comprising the following steps:
launching the setup of a communication link, in response to the mobile radio address assigned to the mobile switching device (100), via a mobile radio network (70), between a calling mobile radio subscriber (80) connected to the mobile radio network (70) and the mobile switching device (100);
transmitting information from the calling mobile radio subscriber (80) to an RF transmitting /receiving stage (110) of the mobile switching device (100) via the mobile radio network (70) according to a first communication protocol;
forwarding the information from the mobile switching device (100) to a called IP subscriber via a public IP-based communications network in response to a predetermined VoIP subscriber number according to a second communication protocol.

## Revendications

1. Dispositif de commutation mobile (100) pouvant être mis en place côté abonné pour la réception et le routage d'informations, comprenant
un dispositif de radiocommunication mobile (110) pour l'émission et la réception d'informations par l'intermédiaire d'un réseau de radiocommunication mobile publique (70),
un dispositif d'émission/réception (120) pour la transmission et la réception d'informations par l'intermédiaire d'un réseau de communication IP publique (60),
un dispositif de conversion (130) d'informations structurées selon un premier protocole de communication permettant la communication par l'intermédiaire du réseau de communication IP (60), en des informations structurées selon un deuxième protocole de communication permettant la communication par l'intermédiaire du réseau de radiocommunication mobile (70), et vice-versa,
un dispositif de commande (150) du routage d'une information reçue par l'intermédiaire du réseau de radiocommunication mobile (70) vers le réseau de communication IP (60), et vice-versa,
un dispositif de connexion à large bande (170) pour la connexion du dispositif de commutation mobile au réseau de communication IP (60) par l'intermédiaire d'une ligne d'abonné numérique à large bande,
le dispositif de radiocommunication mobile (110) contenant une adresse de radiocommunication mobile sous laquelle le dispositif de commutation (100) peut être activé par l'intermédiaire du réseau de radiocommunication mobile publique (70), et un numéro VoIP étant stocké dans le dispositif de commutation (100) sous lequel le dispositif de commutation (100) peut être activé par l'intermédiaire du réseau de communication IP (60).

2. Dispositif de commutation mobile selon la revendication 1, **caractérisé en ce que** le dispositif d'émission/réception (120) est un modem DSL.

3. Dispositif de commutation mobile selon l'une des revendications 1 à 2, **caractérisé par** une interface (180) pour la connexion du dispositif de commutation (100) à un réseau local,
une interface (200) pour la connexion du dispositif à un réseau local sans fil,
une interface analogique et/ou RNIS (190) pour la connexion du dispositif à une ligne d'abonné analogique ou numérique, et/ou
au moins une autre interface pour la connexion du dispositif de télécommunication (30).

4. Dispositif de commutation mobile selon la revendication 3, **caractérisé par** un routeur (140) pour le routage d'une information reçue par l'intermédiaire du réseau de radiocommunication mobile ou du réseau de communication IP vers au moins une des interfaces (180, 190, 200).

5. Dispositif de commutation mobile selon l'une des revendications 1 à 4, **caractérisé en ce que** les informations contiennent des données multimédia, notamment des données audio, vidéo et/ou de texte.

6. Dispositif de commutation mobile selon l'une des revendications 1 à 5, **caractérisé en ce que** le premier protocole de communication permet une téléphonie internet par l'intermédiaire du réseau de communication IP.

7. Procédé de transmission d'une information entre au moins deux abonnés (65, 80) associés à des réseaux de communication publiques (60, 70) différents, utilisant un dispositif de commutation mobile (100) disposé côté abonné, dans lequel est stocké un numéro VoIP sous lequel le dispositif de commutation mobile (100) peut être activé par l'intermédiaire du réseau de communication IP publique (60), comprenant les étapes :
déclenchement de l'établissement d'une communication par l'intermédiaire d'un réseau de communication IP publique (60) entre un abonné IP appelant (65) connecté au réseau de communication IP et le dispositif de commutation mobile (100) en réponse au numéro VoIP associé au dispositif de commutation mobile (100) ;
transmission d'informations par l'abonné IP appelant (65) au dispositif de commutation mobile (100) par l'intermédiaire du réseau de communication IP publique (60) selon un premier protocole de communication ;
routage des informations par un étage d`émission/réception HF du dispositif de commutation (100), en réponse à une adresse de radiocommunication mobile prédéterminée, vers un abonné de radiocommunication mobile (80) appelé par l'intermédiaire d'un réseau publique de radiocommunication mobile (70) selon un deuxième protocole de communication.

8. Procédé selon la revendication 7, **caractérisé en ce que**, avant le routage de l'information, le dispositif de commutation mobile (100) établit une communication vers l'abonné de radiocommunication mobile appelé (80) en réponse à une adresse de radiocommunication mobile prédéterminée, ladite adresse de radiocommunication mobile étant stockée dans le dispositif de commutation mobile (100) ou entrée par l'abonné IP appelant (65).

9. Procédé selon l'une des revendications 7 ou 8, **caractérisé en ce qu'**une adresse de radiocommunication mobile est en plus associée au dispositif de commutation (100) ;
**en ce qu'**une communication est établie, par l'intermédiaire du réseau de radiocommunication mobile (70), entre un abonné de radiocommunication mobile appelant (80) connecté au réseau de radiocommunication mobile (70) et le dispositif de commutation mobile (100) en réponse à l'adresse de radiocommunication mobile associée au dispositif de commutation (100) ;
**en ce que** les informations sont transmises par l'abonné de radiocommunication mobile (80) au dispositif de commutation mobile (100) par l'intermédiaire du réseau de radiocommunication mobile (70) selon le deuxième protocole de communication ; et
**en ce que** les informations sont routées par le dispositif de commutation (100) vers un abonné IP appelé (65) par l'intermédiaire du réseau de communication IP en réponse à un numéro VoIP prédéterminé selon le premier protocole de communication.

10. Procédé de transmission d'une information entre au moins deux abonnés (65, 80) associés à des réseaux de communication publiques (60, 70) différents, utilisant un dispositif de commutation (100) disposé côté abonné, le dispositif de commutation (100) comprenant un dispositif de radiocommunication mobile (110) qui contient une adresse de radiocommunication mobile sous laquelle le dispositif de commutation (100) est activé par l'intermédiaire d'un réseau de radiocommunication mobile publique (70), comprenant les étapes suivantes :
déclenchement de l'établissement d'une communication par l'intermédiaire d'un réseau de radiocommunication mobile (70) entre un abonné de radiocommunication mobile appelant (80) connecté au réseau de radiocommunication (70) publique et le dispositif de commutation mobile (100) en réponse à l'adresse de radiocommunication mobile associée au dispositif de commutation mobile (100) ;
transmission d'informations par l'abonné de radiocommunication mobile appelant (80) à l'étage d'émission/réception HF (110) du dispositif de commutation mobile (100) par l'intermédiaire du réseau de radiocommunication mobile (70) selon un premier protocole de communication ;
routage des informations par le dispositif de commutation mobile (100), en réponse à un numéro VoIP prédéterminé, vers un abonné de IP appelé par l'intermédiaire d'un réseau de communication IP selon un deuxième protocole de communication.
